(19) Europäisches Patentamt
European Patent Office
Office européen des brevets

(11) **EP 4 002 274 A1**

(12) **DEMANDE DE BREVET EUROPEEN**

(43) Date de publication:
**25.05.2022 Bulletin 2022/21**

(21) Numéro de dépôt: **21209251.4**

(22) Date de dépôt: **19.11.2021**

(51) Classification Internationale des Brevets (IPC):
**G06T 7/277** (2017.01)

(52) Classification Coopérative des Brevets (CPC):
**G06T 7/277**; G06T 2207/10028; G06T 2207/10044;
G06T 2207/20021; G06T 2207/20076;
G06T 2207/30261

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **20.11.2020 FR 2011937**

(71) Demandeur: **Commissariat à l'Energie Atomique et aux Energies Alternatives**
**75015 Paris (FR)**

(72) Inventeur: **RAKOTOVAO ANDRIAMAHEFA, Tiana**
**38054 GRENOBLE (FR)**

(74) Mandataire: **Marks & Clerk France**
**Immeuble "Visium"**
**22, avenue Aristide Briand**
**94117 Arcueil Cedex (FR)**

(54) **PROCÉDÉ ITÉRATIF D'ESTIMATION DU MOUVEMENT D'UN CORPS MATÉRIEL PAR GÉNÉRATION D'UNE GRILLE DE MOUVEMENT FILTRÉE**

(57) L'invention concerne un procédé itératif d'estimation du mouvement d'au moins un corps matériel dans un espace environnant discrétisé en une grille de cellules, dans lequel comprenant les étapes suivantes :
a) obtention d'une grille d'incohérence à l'itération t ($IG_t$) générée en réponse à une détection d'un changement d'état d'occupation dans au moins une des cellules de la grille de cellules entre une itération t-1 et l'itération t,
b) génération par récurrence d'une grille de mouvement filtrée à l'itération t $(FMG_t^d, FMG_t^s)$ comprenant, pour chaque cellule de la grille d'incohérence à l'itération t ($IG_t$), une probabilité postérieure $(P(d_{t,i}^A|z_{1:t}), P(s_{t,i}^A|z_{1:t}))$ que le corps matériel ait effectué un mouvement selon au moins une composante de mouvement caractérisant ledit mouvement, ladite composante de mouvement faisant partie d'un ensemble discret de composantes autour de ladite cellule, ladite grille de mouvement filtrée à l'itération t $(FMG_t^d, FMG_t^s)$ étant générée à partir de la grille de mouvement filtrée à l'itération t-1 $(FMG_{t-1}^d, FMG_{t-1}^s)$, d'une grille d'incohérence de l'itération t-1 ($IG_{t-1}$), et de la grille d'incohérence à l'itération t ($IG_t$).

FIG.1

EP 4 002 274 A1

**Description**

L'invention se rapporte à un procédé permettant d'estimer le mouvement d'un corps matériel en déplacement dans l'environnement d'un dispositif autonome (également appelé robot par la suite) à l'aide de capteurs de distance. Elle concerne également un dispositif pour la mise en œuvre d'un tel procédé.

L'invention peut être appliquée à tout type de robots, par exemple des robots terrestres (voitures autonomes), robots aériens (drones), robots sous-marins, etc.

Un robot mobile navigue dans l'espace pour effectuer une tâche. Pour naviguer de manière autonome, le robot doit acquérir des connaissances sur son environnement afin de planifier un chemin, éviter les collisions et naviguer en toute sécurité. Le robot s'appuie à cet effet sur un système de perception.

Le système de perception récupère des données sur l'environnement grâce à des mesures à partir de capteurs embarqués. Un modèle informatique de l'environnement est ensuite construit et mis à jour en continu par le système de perception basé sur des mesures de capteurs. Le robot raisonnera et prendra des décisions de navigation basées sur le modèle d'environnement.

Plusieurs types de modèles d'environnement existent dans l'état de l'art. L'un des plus couramment utilisés en robotique est la grille d'occupation initialement introduite dans l'article de H.P. Moravec et A. Elfes « High resolution maps from wide angle sonar», Proceedings. IEEE ICRA, volume 2, pages 116-121, Mar 1985. La grille d'occupation est une grille de probabilités : chaque cellule a une probabilité d'occupation, donc une valeur comprise entre 0 et 1.

Une grille d'occupation est une carte d'une région délimitée de l'environnement entourant le robot. La région est subdivisée en plusieurs sous-régions adjacentes appelées cellules.

Une cellule peut avoir trois dimensions (3D), par exemple, un cube de 10 cm $\times$ 10 cm $\times$ 10 cm. Il peut également être en deux dimensions (2D), par exemple, l'espace délimité par un carré de 10 cm $\times$ 10 cm. La collection de toutes les cellules forme une grille.

Une cellule est caractérisée par une valeur comprise entre 0 et 1, représentant la probabilité que la cellule soit occupée (on parle de probabilité d'occupation). La grille de caractéristiques est obtenue par seuillage de la grille d'occupation, comme décrit dans la demande de brevet FR3041451. Une grille de caractéristiques est donc une grille booléenne: chaque cellule est « VRAIE » si sa probabilité d'occupation dépasse un certain seuil.

Les grilles d'occupation présentent des propriétés avantageuses pour un système de perception. Ils constituent une méthode robuste pour fusionner plusieurs capteurs de différentes technologies. La demande de brevet FR3041451 fournit un exemple de procédé de fusion multi-capteurs mettant en œuvre des calculs en arithmétique entière.

Les technologies de détection couramment utilisées sont les LIDAR, les RADAR, les caméras et les SONAR. Alors que les caméras donnent des couleurs et des textures détaillées, elles sont limitées dans l'obscurité. Les LIDAR peuvent donner une représentation détaillée de nuages de points, mais leurs performances diminuent en cas de mauvais temps (neige, brouillard ou pluie).

La fusion multi-capteurs est pour cela essentielle pour surmonter la limitation d'une technologie donnée. Les grilles d'occupation permettent également de gérer les incertitudes de mesure et les bruits par des approches probabilistes.

Les grilles de caractéristiques représentent ainsi l'espace libre et l'espace occupé par un ou plusieurs corps matériels. On appelle « corps matériels » (ou obstacle) toute substance ou objet matériel présentant une individualité et pouvant être détecté et identifié par un capteur approprié.

Ainsi, sont considérés des corps matériels les objets inanimés, qu'ils soient naturels ou artificiels, les végétaux, les animaux, les êtres humains, mais aussi des particules liquides ou solides en suspension dans l'air, comme les nuages, voire des masses liquides ou gazeuses.

Par exemple, pour une voiture autonome, les corps matériels courants sont les piétons, les autres voitures, les bâtiments, la végétation, les cyclistes, etc. Les corps matériels peuvent être mobiles, c'est-à-dire dynamiques ou statiques. Le mouvement des corps matériels peut varier dans le temps. Par exemple, un piéton peut se lever sans bouger pendant une courte période, puis marcher dans une direction.

Le mouvement des corps matériels peut également être difficile à prévoir. Par exemple, un piéton qui marche peut soudainement changer de direction pour une raison inconnue.

Bien que les grilles de caractéristiques fournissent une estimation de l'emplacement des corps matériels, il leur manque un modèle de leurs mouvements. En effet, estimer le mouvement des corps matériels est essentiel pour pouvoir suivre l'évolution des corps matériels dans le temps, prédire leurs positions dans un futur proche, prédire les collisions potentielles et adapter la planification de trajectoire de son propre robot en conséquence.

Plusieurs travaux ont été réalisés dans l'état de la technique afin d'étendre les grilles de caractéristiques pour réaliser l'estimation du mouvement des corps matériels. Les corps matériels mobiles modifient l'état d'occupation des cellules au fil du temps.

Pour estimer leur mouvement, l'approche couramment utilisée consiste à développer différents algorithmes pour suivre l'évolution des emplacements des cellules occupées dans le temps. Si ces solutions donnent des résultats prometteurs, leur mise en œuvre sur des unités de traitement embarquées - où les contraintes d'intégration telles que le faible coût, la faible consommation d'énergie et le traitement en temps réel doivent être satisfaites - reste un défi en raison d'une forte demande en puissance de calcul.

Dans les solutions présentes dans l'état de l'art il existe deux types d'approches, dénommées ici le suivi des cellules indépendantes et la détection de cellules dynamiques.

Dans la première approche de suivi des cellules indépendantes, en plus de l'estimation de l'état d'occupation de chaque cellule, une distribution de vitesse probabiliste par cellule est également estimée. La distribution de vitesse estime les vecteurs de vitesse probables de chaque cellule.

Cette approche a été initialement introduite par l'algorithme du Filtre Bayésien d'Occupation dans la demande de brevet FR2890773. Le Filtre Bayésien d'Occupation estime l'occupation de chaque cellule et calcule également une distribution sur un nombre constant de vecteurs de vitesse possibles.

Si le Filtre Bayésien d'Occupation permet d'estimer la vitesse, sa mise en œuvre se caractérise par une charge de calcul élevée et une consommation de mémoire élevée, gênant son intégration dans une unité de traitement embarquée. Le Filtre Bayésien d'Occupation a besoin d'une carte graphique haut de gamme dédiée pour fonctionner en temps réel, ce qui n'est pas compatible pour une intégration dans des robots destinés au grand public.

Pour réduire la complexité de calcul du Filtre Bayésien d'Occupation, divers algorithmes basés sur des filtres à particules ont été mis au point, par exemple celui décrit dans l'article de Nuss, D., Reuter, S., Thom, M., Yuan, T., Krehl, G., Maile, M., Dietmayer, K. (2018) « A random finite set approach for dynamic occupancy grid maps with real-time application », The International Journal of Robotics Research, 37(8), 841-866. La définition d'une particule dans ces algorithmes peut différer mais en général, les particules sont un ensemble de points répartis dans l'espace. Les particules ont des coordonnées de position et un vecteur de vitesse.

Une particule a également un poids utilisé pour estimer les distributions de vitesse. Entre les itérations successives, une particule se déplace en suivant sa vitesse (modulo l'introduction d'une erreur aléatoire).

L'idée de base de ces algorithmes est de répandre au hasard des particules dans l'espace de sorte que leur mouvement suive le mouvement des corps matériels dynamiques. Les particules sont distribuées au sein de la grille de sorte qu'un grand nombre de particules sont présentes dans les cellules occupées par des corps matériels dynamiques.

Bien que l'introduction de filtres à particules ait réduit la complexité algorithmique et également la consommation de mémoire, la mise en œuvre actuelle nécessite toujours des unités de traitement avec des dizaines de GigaFLOPS pour fonctionner en temps réel. Les implémentations actuelles de pointe sont effectuées sur des cartes graphiques intégrées dans des ordinateurs grand public.

L'intégration dans des systèmes embarqués plus spécifiques tels que les microcontrôleurs reste toujours un défi car la spécification de paramètres importants comme le nombre de particules n'est pas encore claire. Il n'y a pas de méthode formelle pour déterminer le nombre minimum de particules de façon à ce que le filtre à particules converge.

L'utilisation de filtres à particules rend également les algorithmes non déterministes. En effet, les filtres à particules reposent sur une étape d'échantillonnage, qui consiste essentiellement à tirer des particules en fonction de leur poids, selon une distribution d'échantillonnage connue.

Le processus d'échantillonnage est un processus aléatoire où des générations de nombres aléatoires sont nécessaires dans la mise en œuvre. Par conséquent, deux exécutions de ces algorithmes basées sur la même séquence de mesures de capteurs peuvent ne pas produire exactement les mêmes résultats. Cette propriété non déterministe rend la vérification de ces algorithmes difficile.

Dans la seconde approche de détection de cellules dynamiques, l'état de la cellule est étendu par une deuxième variable binaire qui est la dynamicité de la cellule : la cellule est-elle dynamique ou non (c'est-à-dire statique). Aucune distribution de vitesse n'est calculée.

La probabilité qu'une cellule soit dynamique est estimée sur la base d'une analyse légère des incohérences entre les grilles d'occupation successives (voir par exemple l'article de Trung-Dung Vu, Olivier Aycard, Nils Appenrodt « Online Localization and Mapping with Moving Object Tracking in Dynamic Outdoor Environments », 2007 IEEE Intelligent Vehicles Symposium, Jun 2007, Istanbul, Turkey (inria-00194152)). Par exemple, une cellule est probablement dynamique si elle était probablement libre dans l'itération précédente et probablement occupée dans l'itération actuelle.

Cela signifie qu'aucun corps matériel n'était présent dans la cellule lors de l'itération précédente, tandis qu'entre les deux itérations, un corps matériel s'est déplacé et a atteint la cellule à l'itération actuelle.

Les approches qui détectent les cellules dynamiques sont légères en termes de calcul par rapport aux approches de suivi des cellules indépendantes. Elles sont moins gourmandes en calcul puisque seul un état binaire par cellule (la dynamicité) est estimé au lieu d'une distribution de probabilité sur un certain nombre de vitesses.

Cependant, il leur manque une estimation du mouvement dynamique des cellules, une estimation qui est fournie par les distributions de vitesse ou par les particules dans le cas du suivi des cellules indépendantes.

L'invention vise donc à fournir un procédé d'estimation du mouvement d'un corps matériel dans un espace environnant dont la mise en œuvre répondra aux contraintes d'intégration embarquées, tout en étant apte à estimer le mouvement dynamique des cellules.

Un objet de l'invention est donc un procédé itératif, mis en œuvre par ordinateur ou par un circuit électronique dédié, d'estimation du mouvement d'au moins un corps matériel dans un espace environnant discrétisé en une grille de cellules, dans lequel, pour chaque itération t donnée, les étapes suivantes sont mises en œuvre : a) obtention d'une grille d'incohérence à l'itération t ($IG_t$) générée en réponse à une détection d'un changement d'état d'occupation dans au moins une des cellules de la grille de cellules entre une itération t-1 et l'itération t, b) génération par récurrence d'une grille de mouvement filtrée à l'itération t ( $FMG_t^d$ , $FMG_t^s$ ) comprenant, pour chaque cellule de la grille de cellules, une probabilité postérieure $(P(d_{t,i}^A|z_{1:t})$ , $P(s_{t,i}^A|z_{1:t}))$ que le corps matériel ait effectué un mouvement selon au moins une composante de mouvement caractérisant ledit mouvement, ladite composante de mouvement faisant partie d'un ensemble discret de composantes de mouvement, ladite grille de mouvement filtrée à l'itération t $(FMG_t^d, FMG_t^s)$ étant générée à partir de la grille de mouvement filtrée à l'itération t-1 $(FMG_{t-1}^d, FMG_{t-1}^s)$ , d'une grille d'incohérence de l'itération t-1 ($IG_{t-1}$) et de la grille d'incohérence à l'itération t ($IG_t$).

Avantageusement, l'étape b) comprend l'application d'un filtre binaire Bayésien, chaque composante de mouvement de l'ensemble discret de composantes étant une variable indépendante d'un filtre binaire Bayésien, la probabilité postérieure $(P(d_{t,i}^A|z_{1:t}), P(s_{t,i}^A|z_{1:t}))$ correspondant à la sortie dudit filtre.

Avantageusement, l'étape a) comprend la génération d'une grille de caractéristiques à l'itération t ($FG_t$), chaque cellule ayant une première valeur booléenne correspondant à un premier état d'occupation prédéterminé, ou ayant une seconde valeur booléenne différente de la première sinon, la grille d'incohérence à l'itération t ($IG_t$) étant générée à partir du changement de valeur booléenne de chaque cellule entre la grille de caractéristiques à l'itération t ($FG_t$) et une grille de caractéristiques générée lors d'une itération t-1 ($FG_{t-1}$).

Avantageusement, le procédé comprend les étapes préalables suivantes : a1) acquisition d'une pluralité de mesures de distance desdits corps matériels issues d'un ou plusieurs capteurs ; a2) application, à chaque dite mesure de distance, d'un modèle inverse du capteur correspondant sur la grille de cellules, pour déterminer une probabilité d'occupation par un corps matériel d'un ensemble de cellules de ladite grille de cellules ; et a3) construction de la grille de caractéristiques à partir des probabilités d'occupation estimées lors de l'étape a2).

Avantageusement, la probabilité postérieure $P(d_{t,i}^A|z_{1:t})$ est approximée par une valeur appartenant à un ensemble de de cardinalité finie, ladite valeur étant identifiée par un indice entier $n(d_{t,i}^A|z_{1:t})$ .

Avantageusement, dans l'étape b), on calcule, pour chaque élément de la grille de mouvement filtrée à l'itération t ($FMG_t^d$) , un indice propagé $n(d_{t-1,i}^A|z_{1:t-1})$ à partir des indices de la grille de mouvement filtrée $FMG_{t-1}^d$ calculée à l'itération précédente t-1, par la relation suivante:

$$n(d_{t-1,i}^A|z_{1:t-1}) = max(FMG_{t-1}^d(A',i))$$

Pour chaque cellule A' antécédente de la cellule A selon la direction i à l'instant t-1 ; Puis on applique un filtre binaire Bayésien avec comme entrées l'indice propagé $n(d_{t-1,i}^A|z_{1:t-1})$ , un indice de probabilité du modèle inverse de capteur $n(d_{t,i}^A|z_t)$ qui correspond à la probabilité $P(d_{t,i}^A|z_t)$ qu'une cellule A suive la composante de mouvement i à l'itération t sachant uniquement la mesure de capteur $z_t$ produite à la même itération, une probabilité $P(d_t^A|d_{t-1}^A)$ que la composante de mouvement du corps matériel ne varie pas entre les itérations t-1 et t, et une probabilité $P(d_t^A|\overline{d_{t-1}^A})$ que la composante de mouvement du corps matériel varie entre les itérations t-1 et t.

Avantageusement, l'indice $n(d_{t,i}^A|z_{1:t-1})$ correspondant à la composante de prédiction du filtre binaire Bayésien pour l'estimation de composante de mouvement est obtenu à l'aide d'une table de consultation comprenant un ensemble fini d'indices de probabilités, et l'indice filtré $n\left(d_{t,i}^{A}\middle|z_{1:t}\right)$ est obtenu par addition d'indices entiers de probabilités.

Avantageusement, la probabilité $P\left(d_{t}^{A}\middle|d_{t-1}^{A}\right)$ de conserver la même composante de mouvement entre les itérations t-1 et t et la probabilité $P\left(d_{t}^{A}\middle|\overline{d_{t-1}^{A}}\right)$ de changer de composante de mouvement entre les itérations t-1 et t sont des paramètres constants en fonction du temps.

Avantageusement, $n\left(d_{t,i}^{A}\middle|z_{t}\right) = \eta_{d} > 0$ si, dans la grille d'incohérence de l'itération t-1 ($IG_{t-1}$) et dans la grille d'incohérence à l'itération t ($IG_{t}$), un changement de valeur booléenne a été mesuré dans la composante de mouvement i par rapport à la cellule A, où $\eta_{d}$ est une constante entière ; $n\left(d_{t,i}^{A}\middle|z_{t}\right) = 0$ sinon.

Avantageusement, ledit ensemble de cardinalité finie de classes de probabilité est formé par l'union d'un ou plusieurs sous-ensembles tels que, lors de l'étape a3), une fusion de deux classes de probabilité appartenant à un même sous-ensemble fournisse un résultat appartenant aussi audit sous-ensemble.

Avantageusement, l'ensemble de cardinalité finie de classes de probabilité, désigné par $G_{p}$, est formé par l'union de deux sous-ensembles $G_{p}^{-}$ et $G_{p}^{+}$ définis par :

$$G_{p}^{-} = \{(q_{n}), n \leq 0\}$$

$$G_{p}^{+} = \{(q_{n}), n \geq 0\}$$

l'indice n prenant des valeurs entières relatives, et les valeurs numériques des classes de probabilité $q_{n}$ étant définies par récurrence de la manière suivante :

$$(q_{n})_{n\in\mathbb{Z}} = \begin{cases} \frac{1}{2} & si\ n = 0 \\ \frac{1}{2} + \epsilon & si\ n = 1 \\ \frac{1}{2} - \epsilon & si\ n = -1 \\ F(q_{n-1}, q_{1}) & si\ n > 1 \\ F(q_{n-1}, q_{-1}) & si\ n < -1 \end{cases}$$

Où $\epsilon$ est un paramètre prédéterminé et dans lequel, lors de ladite étape a3), la fusion $F(q_{n}, q_{m})$ entre deux classes de probabilités $q_{m}, q_{n}$ est calculée par application de l'équation suivante :

$$F(q_{n}, q_{m}) = q_{m+n}$$

Avantageusement, la composante de mouvement correspond à une direction entre deux cellules de la grille de cellules, ou à une vitesse de déplacement d'une cellule à une autre selon une direction donnée.

L'invention se rapporte aussi à un procédé d'évitement d'un corps matériel en mouvement autour d'un corps mobile, mettant en œuvre le procédé précité pour estimer le mouvement du corps matériel, et qu'il envoie une commande à un actionneur du corps mobile afin d'éviter ledit corps matériel.

L'invention se rapporte aussi à un dispositif d'estimation du mouvement d'un corps matériel dans un espace environnant un corps mobile, comprenant :

- au moins un port d'entrée pour recevoir une pluralité de signaux représentatifs d'une série temporelle de mesures de distance issues d'un ou plusieurs capteurs de distance, et
- un processeur de données configuré pour recevoir en entrée lesdits signaux, pour générer une grille de caractéristiques ($FG_t$) à partir desdits signaux, et pour caractériser une dynamique du corps matériel en appliquant un procédé précité.

L'invention se rapporte aussi à un dispositif d'estimation du mouvement d'un corps matériel dans un espace environnant un corps mobile, comprenant :

- au moins un port d'entrée pour recevoir une série temporelle de grilles de caractéristiques issues d'une ou plusieurs caméras événementielles, et
- un processeur de données configuré pour recevoir en entrée ladite série et pour caractériser une dynamique du corps matériel en appliquant un procédé précité.

L'invention se rapporte aussi à un corps mobile, comprenant un dispositif précité.

D'autres caractéristiques, détails et avantages de l'invention ressortiront à la lecture de la description faite en référence aux dessins annexés donnés à titre d'exemple et qui représentent, respectivement :

La figure 1 représente une vue globale du procédé selon l'invention, à une itération t ;

La figure 2 représente un exemple de grille de caractéristiques à l'itération t ;

La figure 3 représente un exemple de grille d'incohérence à l'itération t et à l'itération t-1

La figure 4 représente une vue détaillée de la génération d'une grille de mouvement filtrée de direction à l'itération t ;

La figure 5 représente une vue détaillée de la génération d'une grille de mouvement filtrée de vitesse à l'itération t ;

La figure 6A représente un masque de direction permettant le découpage, autour d'une cellule donnée, de l'ensemble des directions de déplacement ;

La figure 6B représente un masque de vitesse permettant le découpage, autour d'une cellule donnée, de l'ensemble des vitesses de déplacement ;

La figure 7 représente un tableau indiquant les indices de chaque direction du masque de direction, autour de chaque cellule de la grille ;

La figure 8 représente un exemple de grille d'incohérence sur laquelle est appliquée un masque de direction ;

La figure 9 représente le calcul de la propagation des indices d'une cellule, en fonction des indices de la grille de mouvement filtrée à l'itération précédente ;

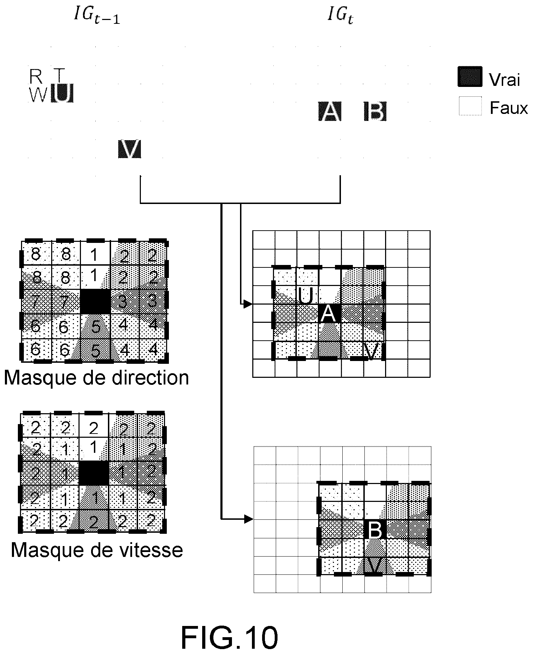

La figure 10 représente un exemple de grille d'incohérence sur laquelle est appliquée un masque de vitesse ;

La figure 11 représente une variante des figures 6A et 6B, dans laquelle on utilise un masque comprenant vingt-quatre zones, permettant d'utiliser conjointement des composantes de mouvement de type direction, et des composantes de mouvement de type vitesse (pour une même direction) ;

La figure 12 illustre le cas où un sous-ensemble du masque est considéré.

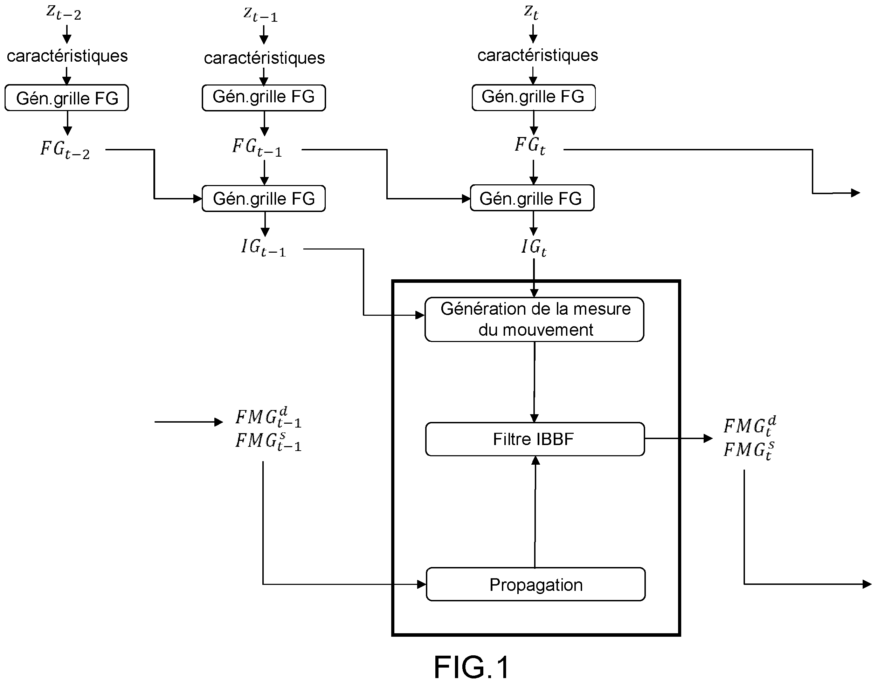

La figure 1 représente, de façon schématique, les différentes données d'entrée et de sortie du procédé selon l'invention.

Le procédé selon l'invention est présenté selon un premier mode de réalisation, dans lequel le mouvement d'un corps matériel est caractérisé par une première composante de mouvement correspondant à la direction et par une deuxième composante de mouvement correspondant à la vitesse. On utilisera donc un masque de direction, et un masque de vitesse.

**Génération de grille de caractéristiques**

Le procédé fonctionne de façon itérative : à chaque itération t, on effectue une nouvelle série de mesures, ce qui permet de mettre à jour l'estimation du mouvement. A chaque itération t, on génère une grille de caractéristiques, qu'on appellera par la suite grille de caractéristiques à l'itération t $FG_t$.

Puis, on observe si des cases de la grille de caractéristiques qui sont « FAUX » à une itération donnée deviennent « VRAIE » à l'itération suivante » (ou l'inverse). L'information d'apparition, ou de disparition, se retrouve dans la grille d'incohérence à l'itération t $IG_t$.

A chaque itération t, on dispose donc de la grille d'incohérence à l'itération t $IG_t$, et de la grille d'incohérence à l'itération t $IG_{t-1}$.

Comme on peut le voir sur la figure 1, on génère ensuite une grille de mouvement filtrée de direction à l'itération t $FMG_t^d$, et une grille de mouvement filtrée de vitesse à l'itération t $FMG_t^s$, qui sont déterminées par récurrence à partir de la grille d'incohérence à l'itération t $IG_t$, de la grille d'incohérence à l'itération t $IG_{t-1}$, et respectivement de la grille de mouvement filtrée de direction à l'itération t-1 $FMG_{t-1}^d$ et de la grille de mouvement filtrée de vitesse à l'itération t-1 $FMG_{t-1}^s$.

L'idée à la base de l'invention consiste à décrire le mouvement de chaque cellule de la grille par un ensemble fini et discret de directions, et chaque direction est ensuite discrétisée en un nombre fini de vitesses.

Cette représentation discrète des directions et des vitesses de déplacement est facilement configurable et impacte linéairement sur la complexité temporelle et sur les ressources en mémoire nécessaire pour exécuter l'algorithme.

L'utilisateur, en jouant sur le nombre de directions et/ou sur le nombre de vitesses, peut ainsi jouer sur la précision du modèle de mouvement et sur les performances de mise en œuvre et d'exécution. En particulier, la complexité algorithmique dépend du nombre de cellules de la grille, du nombre de cellules de chaque masque, du nombre de directions, et du nombre de vitesses par direction.

L'estimation de la dynamique des corps matériels se déplaçant autour du capteur est ainsi effectuée de façon déterministe, le procédé selon l'invention ne faisant appel à aucune génération de nombre aléatoire.

Connaissant la fréquence d'itération des mesures $f$, la longueur de chaque cellule $l_c$ et la longueur du masque $l_m$ (en nombre de cellules), on peut facilement déterminer la vitesse minimale détectée par itération ($v_{min} = l_c \times f$), ainsi que la vitesse minimale détectée par itération $\left(v_{max} = \frac{l_c \times l_m \times f}{2}\right)$, et jouer notamment sur la taille du masque pour régler la vitesse minimale de détection et la vitesse maximale de détection.

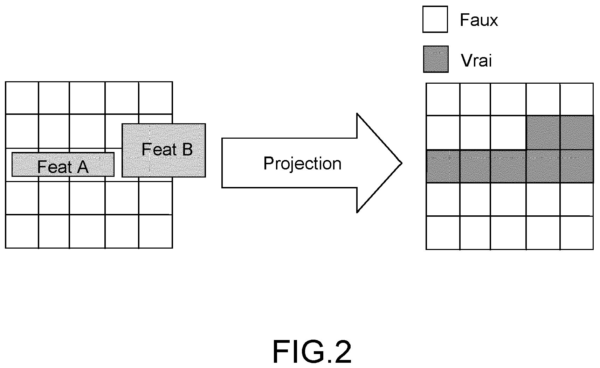

La partie à gauche de la figure 2 illustre deux corps matériels détectés à l'itération t, à savoir les corps « Feat A » et « Feat B ». La grille de caractéristiques $FG_t$, illustrée par la partie à droite de la figure 2, peut être générée à partir d'une série de mesures de distance issues d'un ou de plusieurs capteurs. En fonction de la mesure de distance, on détermine ensuite une probabilité d'occupation, qui dépend du modèle inverse du capteur, comme décrit notamment dans la demande de brevet FR3041451.

On obtient ainsi une probabilité d'occupation pour chaque cellule de la grille de cellules, comprise entre 0 et 1 (grille d'occupation). Cette probabilité est ensuite transformée en valeur booléenne (de type VRAI/FAUX), en appliquant un seuil, qui peut typiquement être égal à 0,5.

Pour des raisons de simplicité de l'exposé, l'invention sera décrite avec un seul capteur permettant d'effectuer les mesures de distance. Le fait d'effectuer les mêmes calculs avec des mesures issues de plusieurs capteurs ne pose aucune difficulté pour l'homme du métier.

La grille de caractéristiques $FG_t$, illustrée par exemple par la figure 2, a donc autant de cellules que la grille d'occupation, et chaque cellule a une valeur booléenne propre au caractère occupé ou non.

**Génération de grille d'incohérence**

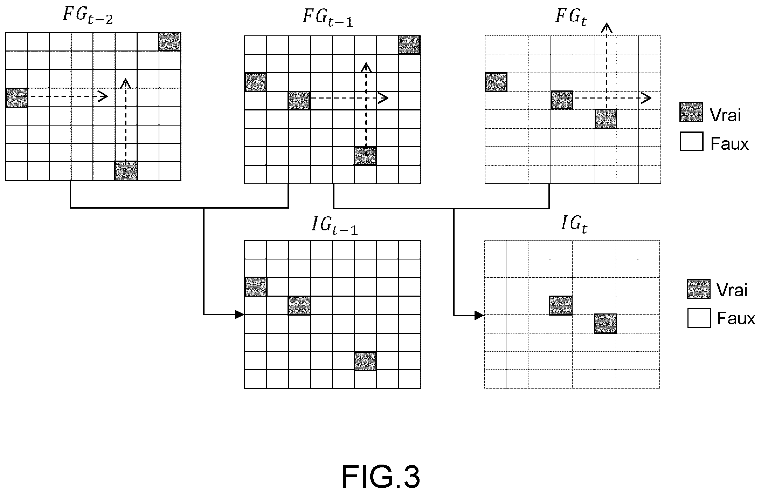

La figure 3 illustre, pour trois itérations successives, la grille de caractéristiques à l'itération t-2 ($FG_{t-2}$), la grille de caractéristiques à l'itération t-1 ($FG_{t-1}$), et la grille de caractéristiques à l'itération t ($FG_t$). Sur chacune de ces grilles, on peut voir des cellules dont la probabilité d'occupation est supérieure au seuil choisi.

On construit deux grilles d'incohérence $IG_{t-1}$ et $IG_t$.

Chaque cellule de la grille d'incohérence $IG_{t-1}$ prend la valeur booléenne « VRAI » si la cellule correspondante de la grille de caractéristiques $FG_{t-1}$ a vu sa valeur booléenne changer entre la grille de caractéristiques $FG_{t-2}$ et la grille de caractéristiques $FG_{t-1}$.

De même, chaque cellule de la grille d'incohérence $IG_t$ prend la valeur booléenne « VRAI » si la cellule correspondante de la grille de caractéristiques $FG_t$ a vu sa valeur booléenne changer entre la grille de caractéristiques $FG_{t-1}$ et la grille de caractéristiques $FG_t$.

Une telle cellule prend une première valeur booléenne, par exemple « VRAI », les autres cellules prenant une deuxième valeur booléenne, par exemple « FAUX ». On obtient ainsi, pour trois itérations successives, deux grilles d'incohérence $IG_{t-1}$ et $IG_t$. Dans l'exemple de la figure 3, la grille d'incohérence $IG_{t-1}$ comprend trois cellules incohérentes, et la grille d'incohérence $IG_t$ en comprend deux.

Les grilles d'incohérence sont ainsi calculées par l'ordinateur ou par le circuit électronique dédié mettant en œuvre le procédé selon l'invention, en fonction des grilles de caractéristiques, elles-mêmes issues des mesures d'au moins un capteur.

En alternative, les grilles d'incohérence peuvent être directement fournies par des caméras événementielles, qui permettent de générer des données d'image d'événement en réponse à la détection d'un changement dans une scène qui se trouve dans son champ de vision. L'homme du métier pourra se référer par exemple à la demande de brevet FR3065133 à ce sujet.

**Génération de la mesure du déplacement**

Que les grilles d'incohérences aient été fournies directement par le capteur, ou calculées à partir de mesure de distance, on calcule à l'itération $t$, pour chaque cellule de la grille, une probabilité postérieure $P\left(d_{t,i}^A \middle| z_{1:t}\right)$ qu'un corps matériel se trouvant dans une cellule A de la grille de cellules se déplace dans la direction i, parmi un ensemble discret de directions autour de la cellule A sachant l'ensemble des mesures $z_{1:t}$ entre l'itération 1 et l'itération $t$, et une probabilité postérieure $P\left(s_{t,i,j}^A \middle| z_{1:t}\right)$ qu'un corps matériel se trouvant dans une cellule A de la grille de cellules se déplace dans la direction i à la vitesse j sachant l'ensemble des mesures $z_{1:t}$ entre l'itération 1 et l'itération $t$.

$d$ correspond à la composante de mouvement de type direction, $s$ correspond à la composante de mouvement de type vitesse. A correspond à l'identifiant d'une des cellules de la grille de cellules. $z_i$ correspond à la $i^{ème}$ observation/mesure. $z_{1:t}$ correspond ainsi à l'ensemble des mesures entre l'itération 1 et l'itération $t$.

La probabilité postérieure $P\left(d_{t,i}^A \middle| z_{1:t}\right)$ et la probabilité postérieure $P\left(s_{t,i,j}^A \middle| z_{1:t}\right)$ peuvent être calculées par l'algorithme du filtre Bayésien binaire, qui permet d'estimer, de façon récursive, la distribution de probabilité d'une variable binaire aléatoire.

Le filtre Bayésien binaire comprend deux grandes étapes, à savoir la prédiction et la mise à jour de mesure. La prédiction permet de prédire l'état courant d'occupation à partir des séquences précédentes de mesure, et la mise à jour permet de corriger l'estimation prédite avec des nouvelles mesures.

Ces calculs peuvent être effectués en utilisant l'arithmétique en virgule flottante, ce qui nécessite des ressources importantes en termes de puissance de calcul, peu compatibles avec les contraintes propres aux systèmes embarqués.

La probabilité postérieure $P\left(d_{t,i}^A \middle| z_{1:t}\right)$ est approximée par une valeur appartenant à un ensemble de cardinalité finie de valeurs numériques entre 0 et 1. L'ensemble étant fini, ses éléments peuvent être identifiés de manière unique par un indice qui est un nombre entier. Soit $n\left(d_{t,i}^A \middle| z_{1:t}\right)$ l'indice de l'élément qui correspond à la valeur numérique de $P\left(d_{t,i}^A \middle| z_{1:t}\right)$. De même, l'indice $n\left(s_{t,i,j}^A \middle| z_{1:t}\right)$ représente l'indice de l'élément qui correspond à la valeur numérique de la probabilité postérieure $P\left(s_{t,i,j}^A \middle| z_{1:t}\right)$. L'indice $n\left(d_{t,i}^A \middle| z_{1:t}\right)$ et l'indice $n\left(s_{t,i,j}^A \middle| z_{1:t}\right)$ étant des nombres entiers, ces indices sont calculés à travers des arithmétiques entières beaucoup plus simples, tout en conservant un niveau de précision acceptable et configurable (bijection entre un nombre entier et un nombre réel compris entre 0 et 1) en fonction des ressources de calcul disponibles.

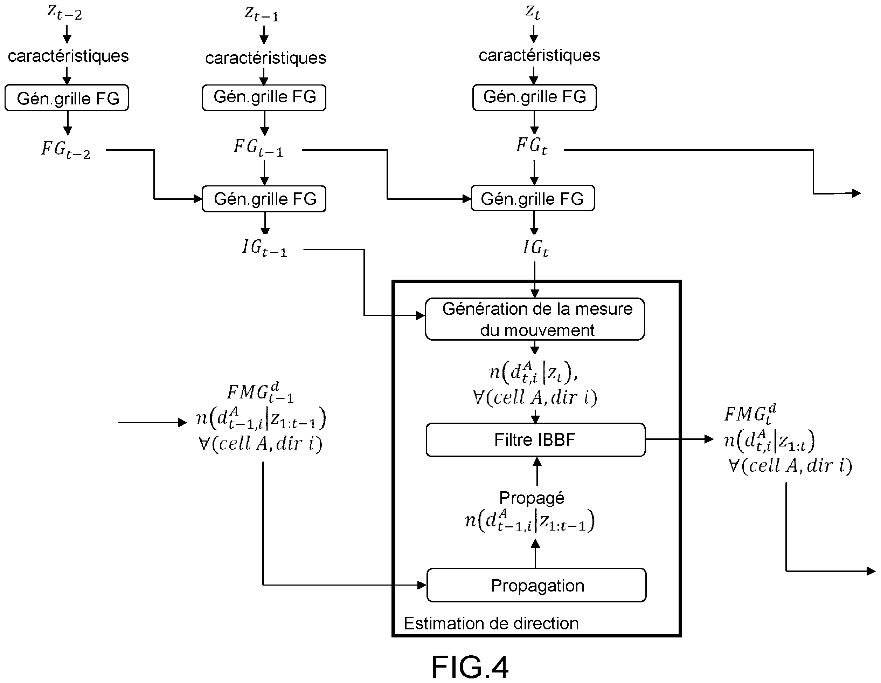

La figure 4, qui est propre à l'estimation de direction, reprend certaines des caractéristiques de la figure 1. Le filtre Bayésien binaire traitant de données entières, que l'on appellera par la suite filtre Bayésien binaire entier, reçoit, à chaque itération t, un ensemble d'indices propagés, résultant d'un processus de propagation des indices à l'itération précédente t-1 $n\left(d_{t-1,i}^A \middle| z_{1:t-1}\right)$, ainsi que l'indice du modèle inverse de capteur $n\left(d_{t,i}^A \middle| z_t\right)$, qui correspond à la probabilité $P\left(d_{t,i}^A \middle| z_t\right)$ qu'une cellule A suive la direction i à l'itération t sachant uniquement la mesure de capteur

$z_t$ produite à la même itération.

Pour chaque cellule incohérente A de la grille d'incohérence $IG_t$ ayant la première valeur booléenne (par exemple la valeur « VRAI »), on va donc regarder les antécédents de ces cellules dans la grille d'incohérence $IG_{t-1}$, et appliquer le masque de directions.

Ainsi, pour le masque de directions, on considère une composante de mouvement de type « direction », qui correspond à une direction pour se déplacer d'une cellule à une autre.

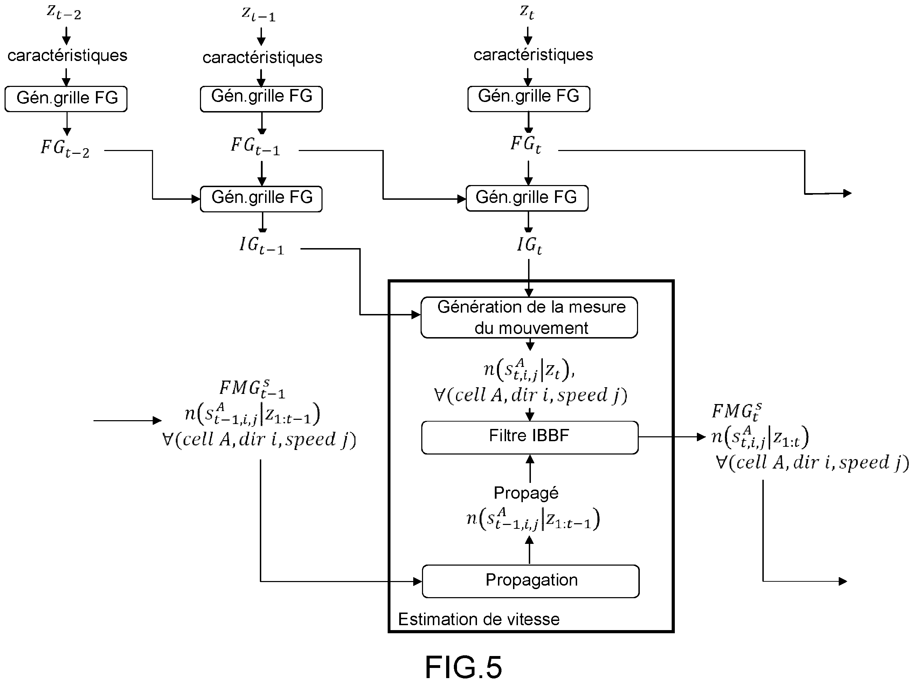

On procède selon le même principe pour l'estimation de vitesse, comme l'illustre la figure 5. On obtient, à chaque itération t, l'indice $n\left(s_{t,i,j}^A \middle| z_{1:t}\right)$, pour chaque cellule A de la grille pour chaque direction i, et pour chaque vitesse j.

Ainsi, pour le masque de vitesse, on considère une composante de mouvement de type « vitesse », qui correspond à la vitesse de déplacement d'une cellule à une autre selon une direction donnée.

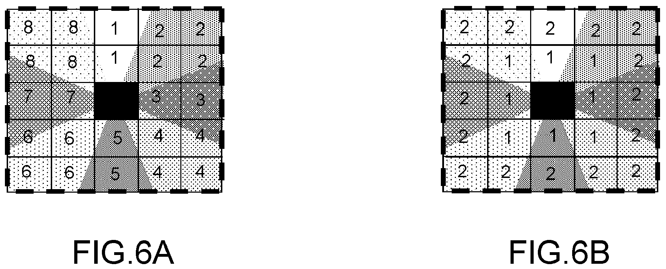

La figure 6A illustre un exemple de masque de directions, et la figure 6B un exemple de masque de vitesses. Le masque de directions contient 5x5 cellules, et huit directions, et le masque de vitesses contient 5x5 cellules et deux vitesses, mais d'autres valeurs peuvent bien entendu être adoptées.

La cellule A se trouve au centre du masque. Chaque direction partant de la cellule est une variable aléatoire binaire indépendante. Pour l'estimation de la direction (cf. figure 4), on emploie ainsi un filtre Bayésien binaire entier par direction.

De même, comme l'illustre la figure 6B, chaque direction partant d'une cellule en Ns vitesses, et chaque vitesse est une variable aléatoire binaire indépendante. Pour l'estimation de la vitesse (cf. figure 5), on emploie ainsi un filtre Bayésien binaire entier par vitesse.

Le fait de considérer chaque direction ou chaque vitesse (parmi un ensemble discret) en tant que variables indépendante d'un filtre binaire Bayésien permet d'estimer le déplacement de plusieurs corps matériels occupant une même cellule à un instant t, avec des probabilités de changement de direction et/ou de vitesse dont la somme n'est pas forcément égale à 1.

Par exemple, deux piétons peuvent être dans une même cellule à un instant t. Le procédé peut tenir compte d'une probabilité égale à 0,9 qu'un des piétons tourne à gauche, et d'une probabilité égale à 0,9 que l'autre piéton tourne à droite.

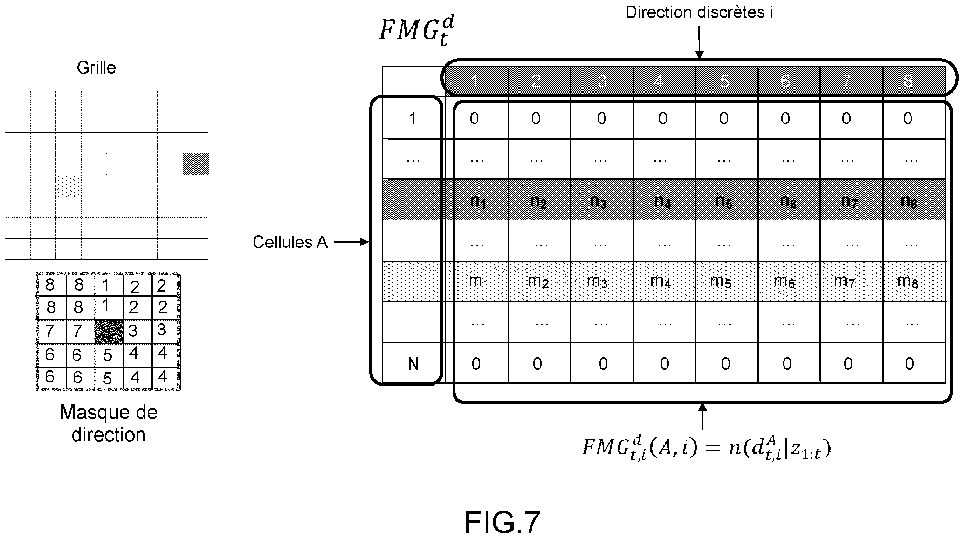

La figure 7 illustre la grille de mouvement filtrée de direction à l'itération t, $FMG_t^d$, qui est une structure de données utilisée pour l'estimation de direction. On retrouve à gauche une grille où deux cellules A et B sont mises en valeurs. Les entrées de la grille de mouvement filtrée de direction correspondantes à cellules sont également mises en valeurs à droite de la figure.

La structure de données correspond à un tableau à double entrée. Chaque ligne correspond à une cellule de la grille. Chaque colonne correspond à une des directions de l'ensemble discret de directions.

On adopte la notation suivante : pour la cellule A, chaque colonne i prend l'indice $n\left(d_{t,i}^A \middle| z_{1:t}\right)$. Pour la cellule B, chaque colonne i prend l'indice $n\left(d_{t,i}^B \middle| z_{1:t}\right)$.

On assume, dans le procédé selon l'invention, qu'une cellule incohérente, à savoir une cellule dans la grille d'incohérence, est potentiellement dynamique. Supposons que le contenu de la cellule A se déplace entre les itérations t-1 et t. Le contenu de A est situé dans A à l'itération t, mais il peut être situé dans d'autres cellules au voisinage de A à t-1.

L'ensemble des emplacements possibles du contenu de A en t-1 est appelé « antécédents » de A. La zone où se trouvent les antécédents de A est délimitée par le masque de direction et le masque de vitesse.

Les antécédents peuvent être définis en ce qui concerne les directions et les vitesses. Les fonctions suivantes désignent les antécédents d'une cellule en ce qui concerne les directions et les vitesses:
$Antecedents_d(A,i)$ désigne l'ensemble des antécédents possibles de la cellule A par rapport à la direction i.

$Antecedents_s(A,i,j)$ désigne l'ensemble des antécédents possibles de la cellule A concernant la vitesse j dans la direction i.

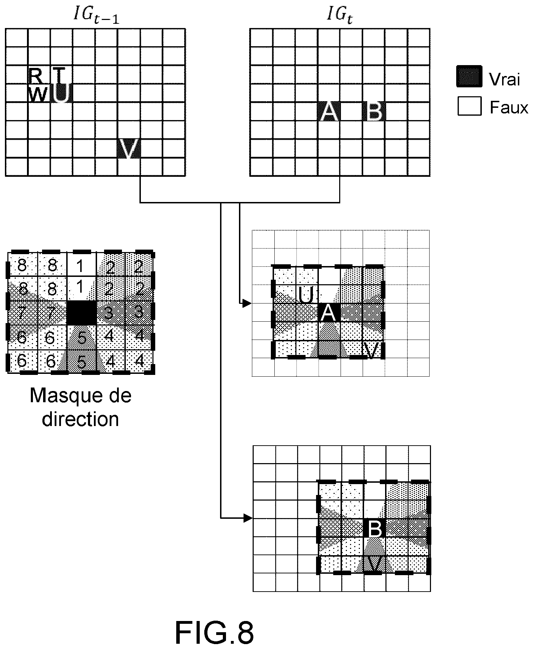

La figure 8 illustre les fonctions $Antecedents_d$ et $Antecedents_s$. Sur cette figure, les cellules incohérentes à l'itération t-1 sont les cellules U et V. Les cellules incohérentes à l'itération t sont les cellules A et B. Les antécédents de la cellule A par rapport à la direction 8 sont : $Antecedents_d(A, 8) = \{R, T, W, U\}$.

De même, les antécédents de la cellule A concernant la vitesse 1 dans la direction 8 sont : $Antecedents_d(A, 8,1) = \{U\}$.

Les antécédents de la cellule A concernant la vitesse 2 dans la direction 8 sont : $Antecedents_d(A, 8,2) = \{R, T, W\}$.

La mesure du déplacement dans la grille peut ensuite être exprimée par les fonctions suivantes $MeasureDirection$ et $MeasureSpeed$, définies ci-après.

La fonction *MeasureDirection* vérifie si une cellule A s'est potentiellement déplacée dans la direction i entre les itérations t-1 et t. Cette fonction renvoie une valeur booléenne:

$$MeasureDirection(A, i, IG_{t-1}, IG_t)$$
$$= \begin{cases} Vrai \text{ si } IG_t(A) = Vrai \land \exists A' \in Antecedents_d(A, i) \text{ tel que } IG_{t-1}(A') = Vrai \\ Faux \text{ sinon} \end{cases}$$

La fonction *MeasureSpeed* vérifie si une cellule A s'est potentiellement déplacée par rapport à la direction i et à la vitesse j entre les itérations t-1 et t. Cette fonction renvoie une valeur booléenne:

$$MeasureSpeed(A, i, j, IG_{t-1}, IG_t)$$
$$= \begin{cases} Vrai \text{ si } IG_t(A) = Vrai \land \exists A' \in Antecedents_s(A, i, j) \text{ tel que } IG_{t-1}(A') = Vrai \\ Faux \text{ sinon} \end{cases}$$

L'application des deux fonctions de mesure de mouvement sur les exemples de la figure 8 donne les résultats suivants. La fonction *MeasureDirection* retournera « FAUX » sauf pour *MeasureDirection(A,8,IG$_{t-1}$,IG$_t$)*, *MeasureDirection(A,4,IG$_{t-1}$,IG$_t$)* et *MeasureDirection(B, 5,IG$_{t-1}$,IG$_t$)*.

En outre, la fonction *MeasureSpeed* retournera « VRAI » pour *MeasureSpeed(A,8,1,IG$_{t-1}$,IG$_t$)*, *MeasureSpeed(A,4,2,IG$_{t-1}$,IG$_t$)* et *MeasureSpeed(B,5,2,IG$_{t-1}$,IG$_t$)*, et « FAUX » pour les autres arguments de la fonction.

Puis, on détermine des indices $n\left(d_{t,i}^A \middle| z_t\right)$ du modèle inverse de capteur, qui constituent la contribution de mise à jour des mesures $z_t$ produites à l'itération *t* dans le filtre Bayésien binaire.

Ces indices sont déterminés par rapport aux résultats de la fonction *MeasureDirection* et de la fonction *MeasureSpeed* décrites précédemment :

$$n\left(d_{t,i}^A \middle| z_t\right) = \begin{cases} \eta_d > 0 \text{ si } MeasureDirection(A, i, IG_{t-1}, IG_t) = VRAI \\ 0 \text{ sinon} \end{cases}$$

$$n\left(s_{t,i,j}^A \middle| z_t\right) = \begin{cases} \eta_s > 0 \text{ si } MeasureSpeed(A, i, j, IG_{t-1}, IG_t) = VRAI \\ 0 \text{ sinon} \end{cases}$$

Les paramètres $\eta_d$ et $\eta_s$ sont des entiers positifs, constants, et choisis de façon empirique.

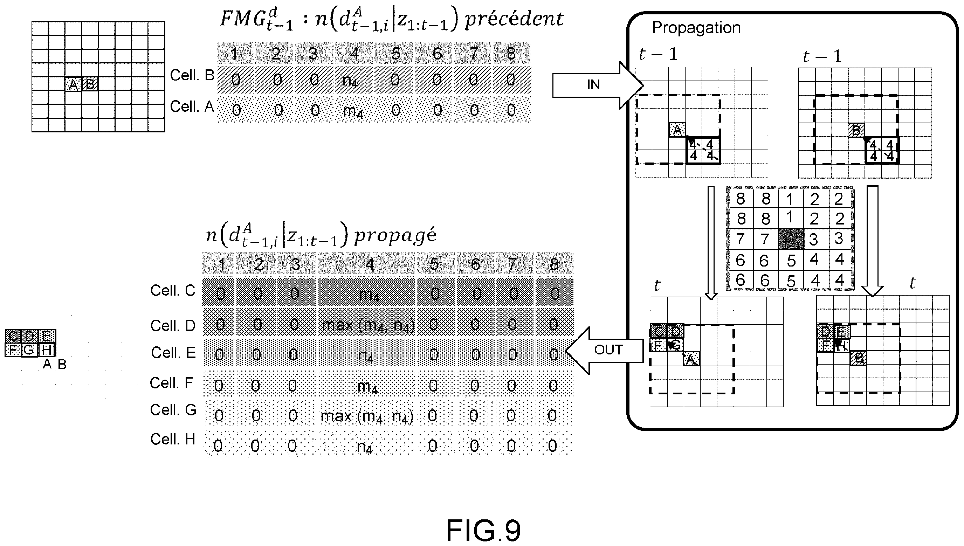

On calcule ensuite la propagation des indices des probabilités postérieures des antécédents. Cette étape est illustrée par la figure 9.

On calcule pour cela, pour chaque élément de la grille de mouvement filtrée de direction à l'itération t $FMG_t^d$, un indice propagé $n\left(d_{t-1,i}^A \middle| z_{1:t-1}\right)$ à partir des indices de la grille de mouvement filtrée de direction $FMG_{t-1}^d$ calculée à itération précédente *t* - 1 :

$$n\left(d_{t-1,i}^A \middle| z_{1:t-1}\right) = max(FMG_{t-1}^d(A', i))$$

Sur la figure 9, on considère, à titre d'exemple, deux cellules A et B, se propageant, entre t-1 et t, selon la direction 4. Ainsi, pour la cellule A, l'indice $n\left(d_{t-1,4}^A \middle| z_{1:t-1}\right)$ dans la grille de mouvement filtrée de direction $FMG_{t-1}^d$ vaut $m_4$, et est nul pour les autres directions.

Pour la cellule B, l'indice $n\left(d_{t-1,4}^{B}\middle|z_{1:t-1}\right)$ dans la grille de mouvement filtrée de direction $FMG_{t-1}^{d}$ vaut $n_4$, et est nul pour les autres directions. Les autres cellules ne sont pas représentées sur le tableau, l'indice de probabilité correspondant étant nul pour toutes les directions.

Le processus de propagation propage vers d'autres cellules les indices non nuls dans la grille de mouvement filtrée de direction $FMG_{t-1}^{d}$ en suivant les directions correspondantes.

Dans l'exemple de la figure 9, seules les cellules A et B ont des indices non nuls dans la grille de mouvement filtrée de direction $FMG_{t-1}^{d}$. Ces indices concernent la direction 4 pour les deux cellules. Leurs indices selon les autres directions sont nuls.

Le résultat du processus de propagation est illustré en bas-gauche de la figure 9. Seules les cellules C, D, E, F, G et H ont des indices propagés non nuls. Les indices propagés des autres cellules sont nuls pour toutes les directions.

Pour la cellule C, son seul antécédent ayant des indices non nuls dans $FMG_{t-1}^{d}$ est la cellule A selon la direction 4. Ainsi, l'indice propagé $n\left(d_{t-1,4}^{C}\middle|z_{1:t-1}\right)$ de la cellule C selon la direction 4 vaut $m_4$. Les antécédents de la cellule D ayant des indices non nuls dans $FMG_{t-1}^{d}$ sont les cellules A et B selon la direction 4. Ainsi, l'indice propagé $n\left(d_{t-1,4}^{D}\middle|z_{1:t-1}\right)$ vaut $max(n_4, m_4)$.

### Filtrage du déplacement

Une fois que le calcul des indices propagés a été effectué, on applique le filtre Bayésien binaire entier. Le filtrage est appliqué pour chaque nouvelle mesure entrante, à savoir à chaque itération.

On rappelle que les données d'entrées sont l'indice propagé de l'itération précédente t-1 $n\left(d_{t-1,i}^{A}\middle|z_{1:t-1}\right)$ ainsi que l'indice de probabilité $n\left(d_{t,i}^{A}\middle|z_{t}\right)$, qui constitue la contribution de mise à jour des mesures dans le filtre Bayésien binaire entier.

Cette étape tire profit de la fonction de fusion entière pour la fonction de filtrage, en utilisant uniquement une arithmétique entière. On a représenté, de manière discrétisée, la probabilité postérieure $P\left(d_{t,i}^{A}\middle|z_{1:t}\right)$ et la probabilité postérieure $P\left(s_{t,i,j}^{A}\middle|z_{1:t}\right)$ respectivement par un indice $n\left(d_{t,i}^{A}\middle|z_{1:t}\right)$ et par un indice $n\left(s_{t,i,j}^{A}\middle|z_{1:t}\right)$, dans un ensemble de cardinalité finie de classes de probabilité.

L'ensemble de cardinalité finie de classes de probabilité est formé par l'union d'un ou plusieurs sous-ensembles tels que, lors de l'étape de mise à jour de la mesure, une fusion de deux classes de probabilité appartenant à un même sous-ensemble fournisse un résultat appartenant aussi audit sous-ensemble.

Avantageusement, l'ensemble de cardinalité finie de classes de probabilité, désigné par $G_p$, est formé par l'union de deux sous-ensembles $G_p^-$ et $G_p^+$ définis par :

$$G_p^- = \{(q_n), n \le 0\}$$

$$G_p^+ = \{(q_n), n \ge 0\}$$

L'indice n prend des valeurs entières relatives, et les valeurs numériques des classes de probabilité $q_n$ sont définies par récurrence de la manière suivante :

$$(q_n)_{n \in \mathbb{Z}} = \begin{cases} \frac{1}{2} & \text{si } n = 0 \\ \frac{1}{2} + \epsilon & \text{si } n = 1 \\ \frac{1}{2} - \epsilon & \text{si } n = -1 \\ F(q_{n-1}, q_1) & \text{si } n > 1 \\ F(q_{n-1}, q_{-1}) & \text{si } n < -1 \end{cases}$$

$\epsilon$ est donc un paramètre prédéterminé du filtre IBBF. Sa valeur est une constante entre 0 et 0,5.

La fusion $F(q_n, q_m)$ entre deux classes de probabilités $q_m$, $q_n$ est calculée par application de l'équation suivante : $F(q_n, q_m) = q_{m+n}$

Le dernier paramètre du filtre IBFF est $\Gamma$, qui est le sous-ensemble de $\mathbb{Z}$ permettant de définir $(q_n)_{n \in \Gamma}$.

Par exemple, si les indices de probabilités sont calculés sur huit bits, $\Gamma = \{-128, ..., 127\}$. Le stockage des indices de probabilités sur huit bits permet de travailler avec une mémoire particulièrement compacte.

Le résultat de la fusion de deux éléments de la séquence $q_n$ peut être calculé par une simple somme des indices des éléments d'entrée.

L'étape de prédiction consiste à consulter, dans une table de consultation, l'indice $n\left(d_{t,i}^A \middle| z_{1:t-1}\right)$ correspondant à la probabilité $P\left(d_{t,i}^A \middle| z_{1:t-1}\right)$ que la cellule *A* prenne la direction *i* à l'itération t sachant l'ensemble de toutes les mesures $z_{1:t-1}$ avant l'itération *t*.

Une fonction d'initialisation du filtre est d'abord invoquée, afin de pré-calculer la table de consultation. Le filtre est initialisé une fois pour toutes, en amont de l'estimation de mouvement.

La fonction d'initialisation du filtre a quatre valeurs d'entrées : le paramètre $\varepsilon$ défini précédemment, $\Gamma$ (le sous-ensemble de $\mathbb{Z}$ permettant de définir $(q_n)_{n \in \Gamma}$), ainsi que les paramètres $\alpha$ et $\beta$ qui correspondent respectivement à la probabilité de garder la même direction entre deux itérations successives, et à la probabilité de changer de direction entre deux itérations successives.

La table de consultation *predLUT* est donc un tableau à deux entrées, une colonne pour *n*, et une colonne pour la valeur correspondante dans la table. Le nombre de lignes est égal à la taille du sous-ensemble $\Gamma$. La table de consultation est initialement vide.

Pour chaque valeur *n* ($n \in \Gamma$), on calcule la probabilités $q_n$ d'après la formule définie précédemment par récurrence, à l'aide du paramètre $\varepsilon$ et de la fusion $F(q_n, q_m)$.

Puis, on fait prendre à *predLUT[n]* la valeur de *approx_policy*($q_n \cdot \alpha$ + (1 - $q_n$) $\cdot \beta$).

La fonction *approx_policy* est telle que chaque entrée de la table de consultation soit approximée afin de correspondre à un élément de $(q_n)_{n \in \mathbb{Z}}$ :

$$\mid predLUT(n) = m \text{ et } approx\_policy(q_n \cdot \alpha + (1 - q_n) \cdot \beta) = q_m$$

Une fois que le filtre a été initialisé, on applique la fonction *predLUT* sur l'indice propagé $n(d_{t-1,i}^A | z_{1:t-1})$, ce qui permet d'obtenir le terme de prédiction du filtre IBBF $n(d_{t,i}^A | z_{1:t-1})$ uniquement par consultation de tableau, sans passer par des calculs..

L'étape de mise à jour du filtre de la mesure consiste à effectuer l'opération suivante :

$$n(d_{t,i}^A | z_{1:t}) \leftarrow n(d_{t,i}^A | z_{1:t-1}) + n(d_{t,i}^A | z_t)$$

On obtient donc, à l'issue de chaque itération, pour chaque cellule de la grille et pour chaque direction i, l'indice $n\left(d_{t,i}^{A}\middle|z_{1:t}\right)$, qui correspond à la probabilité que le corps matériel se déplace dans la direction i.

On applique également à chaque itération un filtre Bayésien binaire entier pour l'estimation de vitesse, comme illustré sur la figure 5.

Les étapes du filtrage sont les mêmes que pour l'estimation de direction, à la différence près que les indices sont filtrés, à chaque itération, pour chaque direction du masque de direction, et pour chaque vitesse du masque de vitesse.

Ainsi, au lieu de manipuler une grille de mouvement filtré pour la direction $FMG_{t}^{d}$, qui est un tableau 2D de dimensions $N_c \times N_d$ ($N_c$ nombre de cellules de la grille, $N_d$ nombre de directions du masque), on manipule, pour les vitesses, une grille de mouvement filtré pour la vitesse $FMG_{t}^{s}$, qui est un tableau 3D de dimensions $N_c \times N_d \times N_s$ ($N_s$ nombre de vitesses du masque).

Chaque élément $FMG_{t}^{s}(A, i, j)$ de la grille de mouvement filtré pour la vitesse $FMG_{t}^{s}$ stocke un indice $n\left(s_{t,i,j}^{A}\middle|z_{1:t}\right)$ que la probabilité postérieure $P\left(s_{t,i}^{A}\middle|z_{1:t}\right)$ que la cellule A se soit déplacée depuis la direction i avec la vitesse $j$ à l'itération $t$.

Ainsi, pour le calcul du filtrage du déplacement selon chaque vitesse, l'homme du métier pourra transposer, sans difficulté, les étapes de prédiction et de mise à jour du filtre IBBF s'agissant des données de vitesse.

Le procédé a été décrit en tenant compte de deux composantes de mouvement caractérisant le mouvement d'un corps mobile, à savoir une composante de direction et une composante de vitesse.

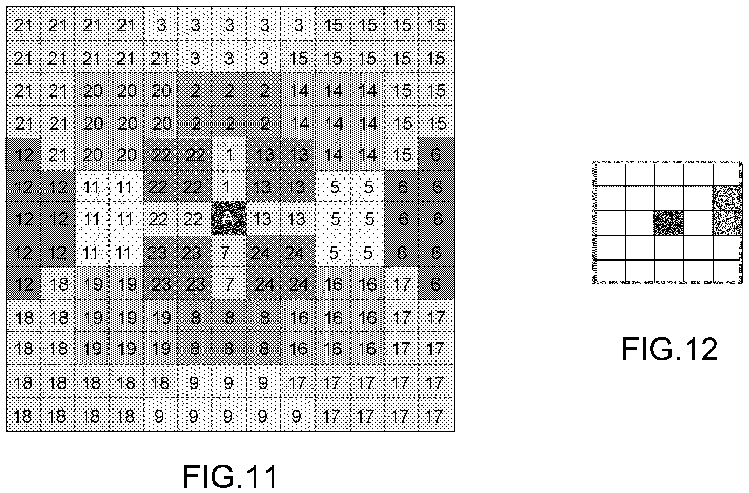

Selon un deuxième mode de réalisation, le procédé peut être mis en œuvre en ne considérant qu'une seule composante de mouvement, comme illustré par la figure 11.

Dans ce cas, la composante de mouvement correspond à une direction entre deux cellules de la grille de cellules, avec plusieurs distances par directions (ce qui revient en fait à considérer plusieurs vitesses de déplacement par directions, compte tenu du changement de distance à chaque itération).

L'espace autour de la cellule A est discrétisé en une pluralité de directions (zones 1, 4, 7, 13, 22, 23 et 24) correspondant à une première composante de mouvement de type direction. Chaque direction a par ailleurs plusieurs niveaux de « profondeur » dans le masque, correspondant à différentes vitesses, elles aussi discrétisées. Par exemple, la zone 4 a trois niveaux de profondeur, correspondant à trois vitesses différentes : la zone 4 elle-même, la zone 5 et la zone 6.

Les calculs d'estimation du mouvement de corps matériels avec un seul masque comprenant plusieurs zones par direction (afin de discrétiser plusieurs vitesses par direction) sont effectués de façon similaire au premier mode de réalisation.

Là aussi, chaque déplacement est une variable binaire aléatoire, estimée par une instance du filtre Bayésien binaire.

En n'utilisant qu'un seul masque au lieu de deux, on supprime une structure de données, ce qui permet de gagner du temps de calcul, sans perdre pour autant de précision dans l'estimation du mouvement. A titre d'illustration, dans l'exemple de la figure 11, il y aurait vingt-quatre filtres à mettre à jour à chaque itération. Avec le premier mode de réalisation, il y aurait 8 filtres à mettre à jour pour les directions, et 24 filtres à mettre à jour pour les vitesses (3 vitesses possibles par direction), donc trente-deux filtres à mettre à jour à chaque itération.

Le procédé selon l'invention n'implique pas nécessairement de tenir compte de toutes les composantes autour de chaque cellule. Comme l'illustre la figure 12, on peut ne s'intéresser qu'à certaines composantes (par exemple deux composantes situées dans la colonne de droite). Cela simplifie également la mise à jour des filtres. Cette implémentation peut être envisagée dans des situations où les déplacements de corps mobiles sont contraints selon certaines directions et/ou certaines vitesses, par exemple sur un tapis roulant dans un site industriel.

Selon un mode de réalisation avantageux, le procédé comprend en outre, suite à l'étape a) d'obtention d'une grille d'incohérence, et à l'étape b) de génération par récurrence d'une grille de mouvement filtrée à l'itération t, une étape c) de détermination, pour chaque cellule de la grille de cellules, de la composante de mouvement correspondant à une probabilité postérieure supérieure à un seuil prédéfini (par exemple 0,8).

La composante de mouvement correspondant à la probabilité postérieure supérieure à un seuil est déterminée en exploitant la grille de mouvement filtrée, illustrée par la figure 7.

Pour chaque cellule, les cellules immédiatement voisines sont considérées. Si une cellule immédiatement voisine a la même composante de mouvement correspondant à la probabilité postérieure supérieure à un seuil, les deux cellules voisines sont regroupées, et ainsi de suite tant que des cellules voisines ayant la même composante de mouvement correspondant à la probabilité postérieure supérieure à un seuil sont identifiées.

Un regroupement de cellules (ou « clustering » selon la terminologie anglo-saxonne) est ainsi effectué (étape d)).

Si les composantes de mouvement d'une cellule ont toutes une valeur de probabilité postérieure nulle, la cellule n'est pas prise en compte, à l'instant t considéré, pour l'étape de regroupement.

L'étape e) comprend ensuite la détermination d'un corps matériel en fonction du résultat de l'étape d) de regroupement. Dans un mode de réalisation appliqué au domaine automobile, il peut être déterminé par exemple si le corps matériel est un piéton, un véhicule motorisé à deux roues ou à quatre roues.

Un module de suivi d'objets est alimenté avec les données issues de l'étape de détermination d'un corps matériel (étape f) de « tracking » selon la terminologie anglo-saxonne).

Le regroupement bénéficie de la structure de la grille de mouvement filtrée, qui est une structure régulière, ce qui facilite les calculs en temps réel dans des processeurs plus petits que ceux utilisés dans l'art antérieur.

Grâce au procédé selon l'invention, l'estimation de mouvement peut être effectuée dans des microprocesseurs, par exemple avec des architectures de type ARM (marque déposée), alors que dans l'art antérieur, l'estimation est très gourmande en ressources informatiques, et nécessite habituellement des processeurs graphiques (ou GPU pour « Graphics Processing Unit »).

Le procédé selon l'invention peut être mis en œuvre par au moins un capteur de distance, par exemple un LIDAR, un RADAR ou encore un SONAR, ou par une caméra apte à extraire des informations de distance à partir d'une scène acquise par le capteur.

Les grilles de caractéristiques sont établies à partir des mesures de distance effectuées par le capteur.

Dans le cas où le capteur est capable de générer des données d'image d'événement en réponse à la détection d'un changement dans une scène qui se trouve dans son champ de vision, ces données sont transmises au processeur de données afin de caractériser la dynamique de mouvement du corps matériel.

Le capteur peut être embarqué à bord du véhicule; en alternative, la scène peut être acquise par le capteur, puis les informations d'estimation du mouvement du corps matériel situé dans la scène peuvent être transmises au corps mobile. Le capteur peut ainsi être positionné à un endroit fixe, par exemple dans un panneau de signalisation, et communiquer avec les véhicules à proximité afin d'actionner des commandes d'évitement.

Le véhicule peut être autonome, ou bien non autonome, et dans ce cas le procédé selon l'invention permet d'assister le conducteur pour la détection d'obstacles.

Le corps mobile peut également être tout dispositif apte à se mouvoir de façon autonome, par exemple un appareil domestique tel qu'un aspirateur autonome, ou encore un appareil de jardinage tel qu'une tondeuse à gazon autonome.

Le corps mobile comprend par ailleurs des actionneurs, aptes à corriger la trajectoire du corps mobile autonome en fonction de l'estimation du mouvement du corps matériel qui a été effectuée grâce au procédé selon l'invention, en vue d'éviter le corps matériel.

Le dispositif d'estimation peut également être installé à une position fixe, dans un capteur de détection d'intrusion. L'utilisation d'une caméra événementielle est particulièrement adaptée à la détection d'intrusion (la scène à observer est généralement fixe, sauf en cas d'intrusion).

L'invention a été essentiellement décrite en discrétisant l'ensemble des probabilités dans un ensemble de cardinalité finie, afin de ne pas avoir à effectuer des calculs utilisant l'arithmétique en virgule flottante. Cette disposition permet en particulier de d'implémenter le procédé selon l'invention dans un système embarqué, ayant de fortes contraintes d'intégration.

Le procédé selon l'invention pourrait également utiliser l'arithmétique en virgule flottante, en particulier si les capacités calculatoires du dispositif mettant en œuvre le procédé permettent d'effectuer l'estimation de mouvement en temps réel.

## Revendications

**1.** Procédé itératif, mis en œuvre par ordinateur ou par un circuit électronique dédié, d'estimation du mouvement d'au moins un corps matériel dans un espace environnant discrétisé en une grille de cellules, dans lequel, pour chaque itération t donnée, les étapes suivantes sont mises en oeuvre :

a) obtention d'une grille d'incohérence à l'itération t ($IG_t$) générée en réponse à une détection d'un changement d'état d'occupation dans au moins une des cellules de la grille de cellules entre une itération t-1 et l'itération t,

b) génération par récurrence d'une grille de mouvement filtrée à l'itération $t\ (FMG_t^d,\ FMG_t^s)$ comprenant, pour chaque cellule de la grille de cellules, une probabilité postérieure $(P(d_{t,i}^A|z_{1:t}), P(s_{t,i}^A|z_{1:t}))$ que le

corps matériel ait effectué un mouvement selon au moins une composante de mouvement caractérisant ledit mouvement, ladite composante de mouvement faisant partie d'un ensemble discret de composantes de mouvement, ladite grille de mouvement filtrée à l'itération t $(FMG_t^d, FMG_t^s)$ étant générée à partir de la grille de mouvement filtrée à l'itération t-1 $(FMG_{t-1}^d, FMG_{t-1}^s)$, d'une grille d'incohérence de l'itération t-1 $(IG_{t-1})$, et de la grille d'incohérence à l'itération t $(IG_t)$.

2. Procédé selon la revendication 1, dans lequel l'étape b) comprend l'application d'un filtre binaire Bayésien, chaque composante de mouvement de l'ensemble discret de composantes étant une variable indépendante d'un filtre binaire Bayésien, la probabilité postérieure $(P(d_{t,i}^A|z_{1:t}), P(s_{t,i}^A|z_{1:t}))$ correspondant à la sortie dudit filtre.

3. Procédé selon l'une des revendications précédentes, dans lequel l'étape a) comprend la génération d'une grille de caractéristiques à l'itération t $(FG_t)$, chaque cellule ayant une première valeur booléenne correspondant à un premier état d'occupation prédéterminé, ou ayant une seconde valeur booléenne différente de la première sinon, la grille d'incohérence à l'itération t $(IG_t)$ étant générée à partir du changement de valeur booléenne de chaque cellule entre la grille de caractéristiques à l'itération t $(FG_t)$ et une grille de caractéristiques générée lors d'une itération t-1 $(FG_{t-1})$.

4. Procédé selon la revendication 3, comprenant les étapes préalables suivantes :

   a1) acquisition d'une pluralité de mesures de distance desdits corps matériels issues d'un ou plusieurs capteurs ;
   a2) application, à chaque dite mesure de distance, d'un modèle inverse du capteur correspondant sur la grille de cellules, pour déterminer une probabilité d'occupation par un corps matériel d'un ensemble de cellules de ladite grille de cellules ; et
   a3) construction de la grille de caractéristiques à partir des probabilités d'occupation estimées lors de l'étape a2).

5. Procédé selon l'une des revendications précédentes, dans lequel la probabilité postérieure $P(d_{t,i}^A|z_{1:t})$ est approximée par une valeur appartenant à un ensemble de de cardinalité finie, ladite valeur étant identifiée par un indice entier $n(d_{t,i}^A|z_{1:t})$.

6. Procédé selon la revendication 5, dans lequel, dans l'étape b), on calcule, pour chaque élément de la grille de mouvement filtrée à l'itération t $(FMG_t^d)$, un indice propagé $n(d_{t-1,i}^A|z_{1:t-1})$ à partir des indices de la grille de mouvement filtrée $FMG_{t-1}^d$ calculée à l'itération précédente t-1, par la relation suivante :

$$n(d_{t-1,i}^A|z_{1:t-1}) = max(FMG_{t-1}^d(A', i))$$

Pour chaque cellule A' antécédente de la cellule A selon la direction i à l'instant t-1 ;

Puis on applique un filtre binaire Bayésien avec comme entrées l'indice propagé $n(d_{t-1,i}^A|z_{1:t-1})$, un indice de probabilité du modèle inverse de capteur $n(d_{t,i}^A|z_t)$ qui correspond à la probabilité $P(d_{t,i}^A|z_t)$ qu'une cellule A suive la composante de mouvement i à l'itération t sachant uniquement la mesure de capteur $z_t$ produite à la même itération, une probabilité $P(d_t^A|d_{t-1}^A)$ que la composante de mouvement du corps matériel ne varie pas entre les itérations t-1 et t, et une probabilité $P(d_t^A|\overline{d_{t-1}^A})$ que la composante de mouvement du corps matériel varie entre les itérations t-1 et t.

7. Procédé selon la revendication 6, dans lequel l'indice $n(d_{t,i}^A|z_{1:t-1})$ correspondant à la composante de prédiction du filtre binaire Bayésien pour l'estimation de composante de mouvement est obtenu à l'aide d'une table de consultation comprenant un ensemble fini d'indices de probabilités, et l'indice filtré $n(d_{t,i}^A|z_{1:t})$ est obtenu par addition d'indices entiers de probabilités.

8. Procédé selon l'une des revendications 6 ou 7, dans lequel la probabilité $P(d_t^A|d_{t-1}^A)$ de conserver la même composante de mouvement entre les itérations t-1 et t et la probabilité $P(d_t^A|\overline{d_{t-1}^A})$ de changer de composante de mouvement entre les itérations t-1 et t sont des paramètres constants en fonction du temps.

9. Procédé selon l'une des revendications 5 à 8, dans lequel : $n(d_{t,i}^A|z_t) = \eta_d > 0$ si, dans la grille d'incohérence de l'itération t-1 ($IG_{t-1}$) et dans la grille d'incohérence à l'itération t ($IG_t$), un changement de valeur booléenne a été mesuré dans la composante de mouvement i par rapport à la cellule A, où $\eta_d$ est une constante entière ;

$$n(d_{t,i}^A|z_t) = 0 \text{ sinon.}$$

10. Procédé selon l'une des revendications 5 à 9, dans lequel ledit ensemble de cardinalité finie de classes de probabilité est formé par l'union d'un ou plusieurs sous-ensembles tels que, lors de l'étape a3), une fusion de deux classes de probabilité appartenant à un même sous-ensemble fournisse un résultat appartenant aussi audit sous-ensemble.

11. Procédé selon la revendication 10, dans lequel l'ensemble de cardinalité finie de classes de probabilité, désigné par $G_p$, est formé par l'union de deux sous-ensembles $G_p^-$ et $G_p^+$ définis par : $G_p^- = \{(q_n), n \le 0\}$, $G_p^+ = \{(q_n), n \ge 0\}$ l'indice n prenant des valeurs entières relatives, et les valeurs numériques des classes de probabilité $q_n$ étant définies par récurrence de la manière suivante :

$$(q_n)_{n\in\mathbb{Z}} = \begin{cases} \dfrac{1}{2} & si\ n = 0 \\ \dfrac{1}{2} + \epsilon & si\ n = 1 \\ \dfrac{1}{2} - \epsilon & si\ n = -1 \\ F(q_{n-1}, q_1) & si\ n > 1 \\ F(q_{n-1}, q_{-1}) & si\ n < -1 \end{cases}$$

Où $\varepsilon$ est un paramètre prédéterminé et dans lequel, lors de ladite étape a3), la fusion $F(q_n, q_m)$ entre deux classes de probabilités $q_m, q_n$ est calculée par application de l'équation suivante :

$$F(q_n, q_m) = q_{m+n}$$

12. Procédé selon l'une des revendications précédentes, dans lequel la composante de mouvement correspond à une direction entre deux cellules de la grille de cellules, ou à une vitesse de déplacement d'une cellule à une autre selon une direction donnée.

13. Procédé selon l'une des revendications précédentes, comprenant en outre les étapes suivantes :

   c) détermination, pour chaque cellule de la grille de cellules, de la composante de mouvement correspondant à une probabilité postérieure supérieure à un seuil ;
   d) regroupement de cellules voisines ayant la même composante de mouvement correspondant à la probabilité postérieure supérieure à un seuil ;
   e) détermination du corps matériel en fonction du résultat de l'étape de regroupement ;
   f) suivi du corps matériel.

**14.** Procédé d'évitement d'un corps matériel en mouvement autour d'un corps mobile, **caractérisé en ce qu'**il met en œuvre le procédé selon l'une des revendications 1 à 13 pour estimer le mouvement du corps matériel, et qu'il envoie une commande à un actionneur du corps mobile afin d'éviter ledit corps matériel.

**15.** Dispositif d'estimation du mouvement d'un corps matériel dans un espace environnant un corps mobile, comprenant:

- au moins un port d'entrée pour recevoir une pluralité de signaux représentatifs d'une série temporelle de mesures de distance issues d'un ou plusieurs capteurs de distance, et
- un processeur de données configuré pour recevoir en entrée lesdits signaux, pour générer une grille de caractéristiques ($FG_t$) à partir desdits signaux, et pour caractériser une dynamique du corps matériel en appliquant un procédé selon l'une des revendications 1 à 13.

**16.** Dispositif d'estimation du mouvement d'un corps matériel dans un espace environnant un corps mobile, comprenant:

- au moins un port d'entrée pour recevoir une série temporelle de grilles de caractéristiques issues d'une ou plusieurs caméras événementielles, et
- un processeur de données configuré pour recevoir en entrée ladite série et pour caractériser une dynamique du corps matériel en appliquant un procédé selon l'une des revendications 1 ou 5 à 13.

**17.** Corps mobile, comprenant un dispositif selon l'une des revendications 15 ou 16.

FIG.1

FIG.2

Faux

Vrai

Projection

Feat B

Feat A

FIG.3

$z_{t-2}$

caractéristiques

Gén.grille FG

$FG_{t-2}$

$z_{t-1}$

caractéristiques

Gén.grille FG

$FG_{t-1}$

Gén.grille FG

$IG_{t-1}$

$z_t$

caractéristiques

Gén.grille FG

$FG_t$

Gén.grille FG

$IG_t$

Génération de la mesure du mouvement

$n\big(d_{t,i}^A\big|z_t\big),$
$\forall(cell\ A, dir\ i)$

$FMG_{t-1}^d$
$n\big(d_{t-1,i}^A\big|z_{1:t-1}\big)$
$\forall(cell\ A, dir\ i)$

Filtre IBBF

Propagé
$n\big(d_{t-1,i}^A\big|z_{1:t-1}\big)$

Propagation

Estimation de direction

$FMG_t^d$
$n\big(d_{t,i}^A\big|z_{1:t}\big)$
$\forall(cell\ A, dir\ i)$

FIG.4

FIG.5

FIG.6A

FIG.6B

$$FMG_t^d$$

Direction discrètes i

Grille

Masque de
direction

| | 1 | 2 | 3 | 4 | 5 | 6 | 7 | 8 |
|---|---|---|---|---|---|---|---|---|
| 1 | 0 | 0 | 0 | 0 | 0 | 0 | 0 | 0 |
| ... | ... | ... | ... | ... | ... | ... | ... | ... |
| | $n_1$ | $n_2$ | $n_3$ | $n_4$ | $n_5$ | $n_6$ | $n_7$ | $n_8$ |
| | ... | ... | ... | ... | ... | ... | ... | ... |
| | $m_1$ | $m_2$ | $m_3$ | $m_4$ | $m_5$ | $m_6$ | $m_7$ | $m_8$ |
| | ... | ... | ... | ... | ... | ... | ... | ... |
| N | 0 | 0 | 0 | 0 | 0 | 0 | 0 | 0 |

Cellules A

$$FMG_{t,i}^d(A, i) = n(d_{t,i}^A | z_{1:t})$$

FIG.7

$IG_{t-1}$

$IG_t$

■ Vrai

□ Faux

| 8 | 8 | 1 | 2 | 2 |
|---|---|---|---|---|
| 8 | 8 | 1 | 2 | 2 |
| 7 | 7 | ■ | 3 | 3 |
| 6 | 6 | 5 | 4 | 4 |
| 6 | 6 | 5 | 4 | 4 |

Masque de
direction

FIG.8

FIG.9

EP 4 002 274 A1

$IG_{t-1}$ $IG_t$

R T
W U
A B

Vrai
Faux

V

8 8 1 2 2
8 8 1 2 2
7 7 3 3
6 6 5 4 4
6 6 5 4 4

Masque de direction

U
A
V

2 2 2 2 2
2 1 1 1 2
2 1 1 2
2 1 1 1 2
2 2 2 2 2

Masque de vitesse

B
V

FIG.10

EP 4 002 274 A1

| 21 | 21 | 21 | 21 | 3 | 3 | 3 | 3 | 3 | 15 | 15 | 15 | 15 |
|----|----|----|----|----|----|----|----|----|----|----|----|----|
| 21 | 21 | 21 | 21 | 21 | 3 | 3 | 3 | 15 | 15 | 15 | 15 | 15 |
| 21 | 21 | 20 | 20 | 20 | 2 | 2 | 2 | 14 | 14 | 14 | 15 | 15 |
| 21 | 21 | 20 | 20 | 20 | 2 | 2 | 2 | 14 | 14 | 14 | 15 | 15 |
| 12 | 21 | 20 | 20 | 22 | 22 | 1 | 13 | 13 | 14 | 14 | 15 | 6 |
| 12 | 12 | 11 | 11 | 22 | 22 | 1 | 13 | 13 | 5 | 5 | 6 | 6 |
| 12 | 12 | 11 | 11 | 22 | 22 | A | 13 | 13 | 5 | 5 | 6 | 6 |
| 12 | 12 | 11 | 11 | 23 | 23 | 7 | 24 | 24 | 5 | 5 | 6 | 6 |
| 12 | 18 | 19 | 19 | 23 | 23 | 7 | 24 | 24 | 16 | 16 | 17 | 6 |
| 18 | 18 | 19 | 19 | 19 | 8 | 8 | 8 | 16 | 16 | 16 | 17 | 17 |
| 18 | 18 | 19 | 19 | 19 | 8 | 8 | 8 | 16 | 16 | 16 | 17 | 17 |
| 18 | 18 | 18 | 18 | 18 | 9 | 9 | 9 | 17 | 17 | 17 | 17 | 17 |
| 18 | 18 | 18 | 18 | 9 | 9 | 9 | 9 | 9 | 17 | 17 | 17 | 17 |

FIG.11

FIG.12

Europäisches
Patentamt

European
Patent Office

Office européen
des brevets

# RAPPORT DE RECHERCHE EUROPEENNE

Numéro de la demande

EP 21 20 9251

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | HUILI YU ET AL: "Probabilistic path planning for cooperative target tracking using aerial and ground vehicles", 2011 AMERICAN CONTROL CONFERENCE (ACC 2011) : SAN FRANCISCO, CALIFORNIA, USA, 29 JUNE – 1 JULY 2011, IEEE, PISCATAWAY, NJ, 29 juin 2011 (2011-06-29), pages 4673-4678, XP032034565, ISBN: 978-1-4577-0080-4 | 1,12, 14-17 | INV. G06T7/277 |
| Y | * abrégé * | 2,3 | |
| A | * page 4673, colonne 1, section I * * page 4674, colonne 1, section II, paragraphe 2 * * page 4675, colonne 2, avant-dernier paragraphe * | 4-11,13 | |
| Y | US 2020/257931 A1 (YERSHOV DMYTRO S [US] ET AL) 13 août 2020 (2020-08-13) * abrégé * * alinéa [0118] * | 2,3 | |
| | ----- | | DOMAINES TECHNIQUES RECHERCHES (IPC) |
| | | | G06T |

Le présent rapport a été établi pour toutes les revendications

| Lieu de la recherche | Date d'achèvement de la recherche | Examinateur |
|---|---|---|
| Munich | 30 mars 2022 | Turina, Andreas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 21 20 9251

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-03-2022

| Document brevet cité au rapport de recherche | Date de publication | Membre(s) de la famille de brevet(s) | | Date de publication |
|---|---|---|---|---|
| US 2020257931 A1 | 13-08-2020 | US | 2020257931 A1 | 13-08-2020 |
| | | WO | 2020146447 A1 | 16-07-2020 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3041451
- FR 2890773
- FR 3065133

**Littérature non-brevet citée dans la description**

- **H.P. MORAVEC ; A. ELFES.** High resolution maps from wide angle sonar. *Proceedings. IEEE ICRA,* Mars 1985, vol. 2, 116-121
- **NUSS, D. ; REUTER, S. ; THOM, M. ; YUAN, T. ; KREHL, G. ; MAILE, M. ; DIETMAYER, K.** A random finite set approach for dynamic occupancy grid maps with real-time application. *The International Journal of Robotics Research,* 2018, vol. 37 (8), 841-866
- **TRUNG-DUNG VU ; OLIVIER AYCARD ; NILS AP-PENRODT.** Online Localization and Mapping with Moving Object Tracking in Dynamic Outdoor Environments. *2007 IEEE Intelligent Vehicles Symposium,* Juin 2007